# EUROPEAN PATENT APPLICATION

(11) **EP 2 830 123 A2**
(43) Date of publication of application: **28.01.2015**
(21) Application number: 14171349.5
(22) Date of filing: 05.06.2014
(51) Int. Cl.: H01M 2/10

(54) **Sealing member and storage battery temperature adjusting apparatus using the same**

(30) Priority: 23.07.2013 JP 2013152266
(71) Applicant: Valeo Japan Co., Ltd., Saitama 360-0193 (JP)
(72) Inventor: Nagano, Hideki, SAITAMA, 360-0193 (JP); Takahashi, Osamu, SAITAMA, 360-0193 (JP); Hayashi, Naoto, SAITAMA, 360-0193 (JP)
(74) Representative: Pellegrini, Marie Claude

(57) **Abstract**

A sealing member (1) is provided in a wall portion of a module case(22) that accommodates a storage battery(23) in an internal space(21), and blocks the internal space(21) of the module case (22) from an external space (25) with the wall portion. External tubes (501, 502) are fixed to an external space side of a path through which a heating medium flows by an external fixing member (bolt) (71), and internal tubes (503, 504) are fixed to an internal space side of the path by an internal fixing member (bolt) (72). The sealing member (1) is formed with an external mounting hole(111a) for mounting the external fixing member (bolt), and an internal mounting hole(112a) for mounting the internal fixing member (bolt). The mounting holes (111a, 112a) are formed as bottomed holes, that is, holes that are not penetrated or blind holes.

## Description

### BACKGROUND OF THE INVENTION

### 1. Field of the Invention

The present invention relates to a sealing member provided in a wall portion of a module case that accommodates a storage battery mounted in an electric car or the like, and a storage battery temperature adjusting apparatus using the same.

### 2. Description of Related Art

It is necessary to manage a vehicle driving battery provided in an electric car or a hybrid car by a temperature adjusting apparatus such as a heat exchanger at a predetermined temperature to optimize a charging/discharging performance.

Further, in many cases, the battery is mounted in a vehicle as a module provided with the temperature adjusting apparatus or the like. For example, such a module is provided with a battery case that accommodates the battery; and a battery cooling device that includes a fan that is provided inside the battery case and sends air to the battery, and an evaporator that is provided inside the battery case and cools the air sent to the battery by heat exchange between a refrigerant flowing inside and the sent air (see JP-A-2008-054379 and JP-A-2012-109185).

In such a battery cooling device, in order to allow a refrigerant supplied and recovered by a refrigerating cycle (air-conditioning cycle) to flow inside an evaporator and perform heat exchange between the refrigerant that flows inside the evaporator and peripheral air, an opening part where a cooling path for supplying a refrigerant to an evaporator is disposed is formed in a battery case, and a refrigerant tube of an external space side and a refrigerant tube of an internal space side are connected to each other through a tube connector (sealing member) mounted in the opening part.

For example, in a tube connector shown in Japanese Patent No. 3491957, a mounting base (sealing member) is supported and fixed in a hole portion formed in a wall portion (dash board) that partitions the inside and outside through a seal member, and a connection hole for connection of a refrigerant tube is formed in the mounting base. Further, a screw hole to be engaged with a bolt is formed in the mounting base to pass through one end surface (internal space side surface) and the other end surface (external space side surface) of the mounting base, and the refrigerant tube is fastened and fixed to the mounting base by the bolt through a fixing block.

In this regard, in a module case that accommodates a storage battery, in order to prevent occurrence of rust inside a module or a short circuit, it is necessary to secure high sealability capable of preventing movement of moisture or dust between the outside and inside of the module case.

However, in the above-described mounting base (sealing member), although it is possible to prevent refrigerant leakage between the refrigerant tube and the mounting base by the seal member (O ring) provided around the tube, the screw hole for the bolt that fixes the fixing block to the mounting base is formed to be penetrated from the external space side surface of the mounting base to the internal space side surface, and thus, moisture or dust moves between the external space and the internal space through a gap between the bolt and the mounting base, and it is difficult to sufficiently secure sealability of the case.

### SUMMARY OF THE INVENTION

In order to solve the above problem, a main object of the invention is to provide a sealing member that is provided in a part of a module case where a tube through which a heating medium flows between an external space and an internal space is disposed and is capable of securing high sealability of the module case by preventing movement of moisture or dust between the external space and the internal space, and a storage battery temperature adjusting apparatus using the same.

According to an aspect of the invention, there is provided a sealing member that is provided in a wall portion of a module case that accommodates a storage battery in an internal space and blocks the internal space of the module case from an external space with the wall portion, including: a path that connects the external space side and the internal space side and allows a heating medium for adjusting temperature of the internal space to flow therein; an external mounting hole that is connected to the external space side of the path to fix an external tube through which the heating medium flows by an external fixing member; and an internal mounting hole that is connected to the internal space side of the path to fix an internal tube through which the heating medium flows by an internal fixing member, in which the external mounting hole and the internal mounting hole are formed as bottomed holes, that is, holes that are not penetrated or blind holes.

Accordingly, even when the tubes (external tube and internal tube) that allow the heating medium to flow into the sealing member provided in the wall portion of the module case are fixed to the external space side and the internal space side by the fixing members (external fixing member and internal fixing member), since the mounting holes (external mounting hole and internal mounting hole) for mounting the respective fixing members are formed as the bottomed holes (holes that are not penetrated or blind holes), it is possible to prevent moisture or dust from moving between the external space and the internal space through gaps between the fixing members (external fixing member and internal fixing member) and the sealing member.

Here, the external mounting hole for mounting the external fixing member on the external space side and the internal mounting hole for mounting the internal fixing member on the internal space side may be formed so that axial centers thereof shift from each other. With this configuration, it is possible to reduce the thickness of the sealing member, that is, to reduce the size of the sealing member along an axial direction of the mounting holes (external mounting hole and internal mounting hole), or to increase the depth of the respective mounting holes (external mounting hole and internal mounting hole).

According to another aspect of the invention, there is provided a storage battery temperature adjusting apparatus including: the sealing member provided in the wall portion of the module case that accommodates the storage battery in the internal space; a housing that is disposed in the internal space of the module case and is formed with an airflow path; a cooler that is accommodated in the airflow path of the housing; a fan that is capable of sending air to the cooler; and the internal tube, in which the internal tube connects the sealing member to the cooler.

Furthermore, the storage battery temperature adjusting apparatus may further include an expansion device. In this case, an inner cooling path of the expansion device may form a part of the internal tube, and the expansion device may be disposed between the sealing member and the internal tube. Furthermore, the expansion device and the internal tube may be fixed to the internal space side of the sealing member by the internal fixing member.

As described above, according to the invention, since the mounting holes (external mounting hole and internal mounting hole) formed in the sealing member provided in the wall portion of the module case for mounting of the fixing members (external fixing member and internal fixing member) for fixing the tubes are formed as the bottomed holes, that is, the holes that are not penetrated or the blind holes, it is possible to prevent moisture or dust from moving between the external space and the internal space through the gaps between the fixing members (external fixing member and internal fixing member) and the sealing member, and to secure high sealability of the module case.

### BRIEF DESCRIPTION OF THE DRAWINGS

Fig. 1 is a diagram illustrating an overall configuration of a battery module provided with a sealing member according to an embodiment of the invention.
Fig. 2 is an enlarged sectional view illustrating a mounting state of the sealing member.
Fig. 3 is an exploded view illustrating respective components used in a mounting structure in Fig. 2.
Fig. 4A is a plan view of the sealing member, Fig. 4B is a side view thereof, and Fig. 4C is a bottom view thereof.
Fig. 5A is a plan view illustrating a modification example of the sealing member, Fig. 5B is a side view thereof, and Fig. 5C is a bottom view thereof.
Fig. 6 is an enlarged sectional view illustrating another mounting state of the sealing member.
Fig. 7 is an exploded view illustrating respective components used in a mounting structure in Fig. 6.

### DESCRIPTION OF EMBODIMENTS

Hereinafter, a sealing member according to an embodiment of the invention will be described with reference to the accompanying drawings.

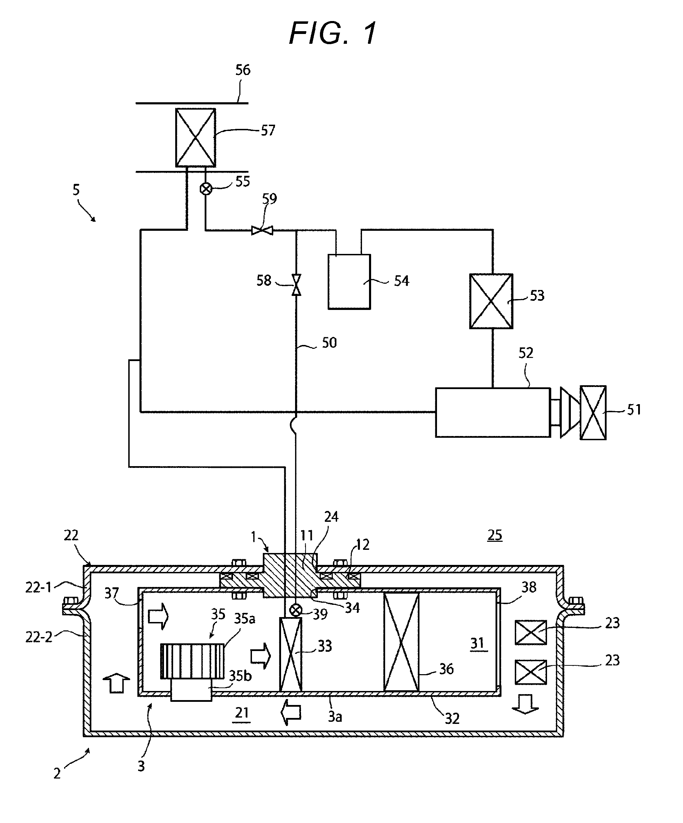

In Fig. 1, a battery module 2 that includes a sealing member 1 according to the present embodiment of the invention is shown. The battery module 2 includes a module case 22 having an internal space 21. A battery (storage battery) 23 that supplies power to a drive motor of an electric car, a hybrid car or the like is accommodated in the internal space 21. A battery temperature adjusting unit (storage battery temperature adjusting apparatus) 3 that adjusts the temperature of the internal space 21 is accommodated in the internal space 21.

The module case 22 of the battery module 2 is formed as a hollow box that is made of a metal such as aluminum or resin and has an approximately rectangular shape, and has a module opening 24 opened in any one of an upper surface, a side surface, and a bottom surface. The module case 22 is provided with a cover member 22-1 and a box member 22-2. As the battery 23, the battery temperature adjusting unit 3, various electric interconnections (not shown), and the like are mounted inside the box member 22-2 and are then covered with the cover member 22-1, these components are accommodated in the internal space 21.

In this example, the battery 23 is formed in a thin-plate rectangular shape and is fixed to the module case 22. The shape of the battery 23 may be a cylindrical shape, and the shape is not particularly limited.

The battery temperature adjusting unit 3 includes a housing 32 in which an airflow path 31 is formed. Since at least an evaporator (heat exchanger for cooling) 33 is arranged in the airflow path 31, a fan (blower) 35 that sends air to the inside of the airflow path 31 and a heater core (heat exchanger for heating) 36 may be additionally provided as necessary.

The housing 32 is made of resin such as polypropylene and is formed as a hollow box. In the housing 32, a housing opening 34 that is opened in a portion (in the same direction as an opening direction of the module opening (an upper surface in the figure)) opposite to the module opening 24 formed in the module case 22, an inlet hole 37 that is opened in one side surface and through which air flows in, and an outlet hole 38 that is opened in the other side surface and through which the air flows out are provided.

The blower 35 is provided with an impeller 35a that sends the air flowed from an axial direction to a radial direction and a drive motor 35b that rotates the impeller 35a, so that the air flowed in through the inlet hole 37 flows out through the outlet hole 38.

In this example, the heater core 36 is an electric heater core that heats the air passed through the evaporator 33, and is provided with plural heat generating elements (not shown) and plural radiation fins disposed between the heat generating elements in a stacking direction. The heater core 36 may be a known hot water type heater core (not shown).

The evaporator 33 includes the radiation fins such as corrugate fins, and cools the air by evaporation of a refrigerant in this example. To this end, the evaporator 33 is connected, through a bypass path 50 that bypasses a part of a refrigerating cycle 5 of a vehicle air conditioning device, to the refrigerating cycle 5. Further, on an upstream side of the bypass path 50 with reference to the evaporator 33, an expansion device (for example, a mechanical expansion valve, an electric expansion value where a valve opening degree varies according to an external signal, or an orifice tube) 39 is provided. In this example, the expansion device 39 is provided inside the housing 32.

In this example, the refrigerating cycle 5 is configured by a compressor 52 connected to and driven by an engine for traveling (not shown) or the like through an electromagnetic clutch 51; a condenser 53 that condenses a refrigerant compressed by the compressor 52; a liquid tank 54 that separates a gaseous refrigerant and a liquid refrigerant from the refrigerant that is condensed by the condenser 53 to become a mixture of gas and liquid; an air-conditioning expansion device (for example, a mechanical expansion valve, an electric expansion value where a valve opening degree varies according to an external signal, or an orifice tube) 55 that expands the liquid refrigerant to decrease pressure; and an air-conditioning evaporator 57 that evaporates the refrigerant of which the pressure is decreased by the air-conditioning expansion device 55 to cool air passing through an air-conditioning duct 56. The bypass path 50 is connected in parallel with respect to the air-conditioning expansion device 55 and the air-conditioning evaporator 57. The compressor 52 may be an electric compressor that does not include the electromagnetic clutch 51. Furthermore, the refrigerating cycle 5 may include an exclusive path through which the refrigerant is supplied only to the battery temperature adjusting unit 3, without including the refrigerant path for air-conditioning.

Furthermore, a first on-off valve 58 that opens or closes the bypass path 50 is provided on the bypass path 50. Further, between the air-conditioning expansion device 55 and a branch point of the bypass path 50, a second on-off valve 59 that opens and closes the flow of the refrigerant to the air-conditioning expansion device 55 is provided. Thus, when a user desires to operate only the vehicle air-conditioning device for cooling, the first on-off valve 58 is closed and the second on-off valve 59 is opened to operate the compressor 52. Further, when the user desires to operate the evaporator 33 when the vehicle air-conditioning device is operated for cooling, the first on-off valve 58 is opened and the second on-off valve 59 is also opened to operate the compressor 52. Further, when the user does not desire the cooling of the inside of the vehicle using the vehicle air-conditioning device but desires to operate only the evaporator 33, the first on-off valve 58 is opened and the second on-off valve 59 is closed to operate the compressor 52.

If the expansion device 39 and the air-conditioning expansion device 55 are exchanged into an electric expansion device capable of performing a variable control of the valve opening degree and shutting of the valve, it is possible to arbitrarily perform the opening and closing of the refrigerant path, and thus, it is possible to remove the on-off valves 58 and 59.

Further, although not shown, the evaporator 33 may employ a type that uses cold water or cold coolant as a heating medium instead of the refrigerant.

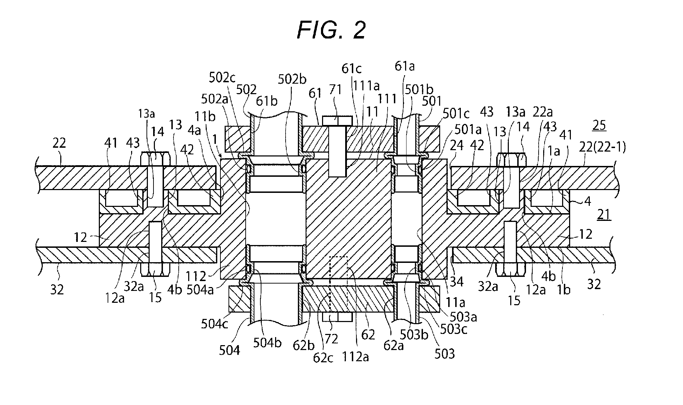

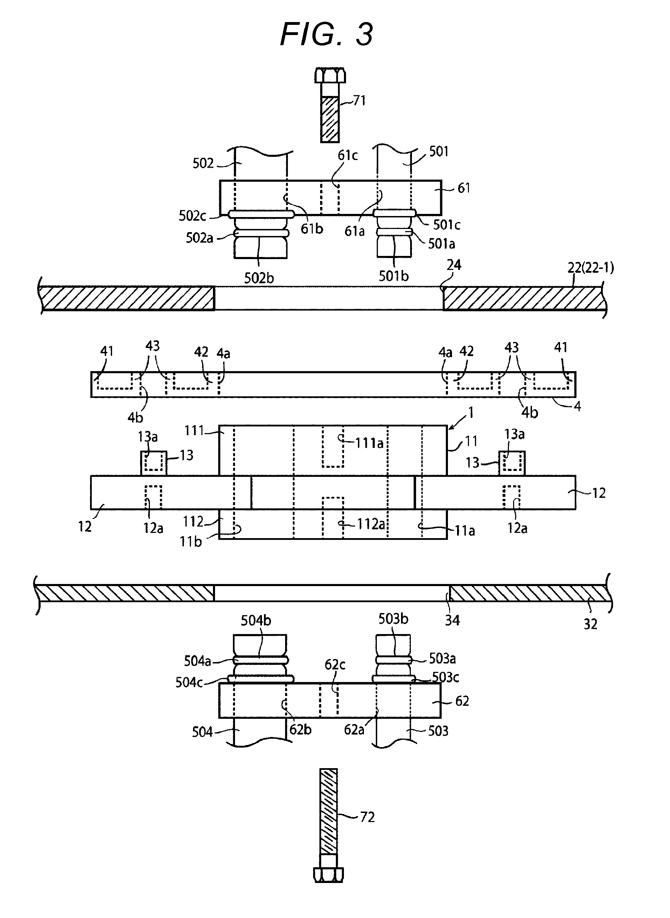

In a wall portion of the module case 22, as shown in Figs. 2 and 3, the sealing member 1 that blocks the internal space 21 of the module case 22 from an external space 25 with the wall portion and fixes a tube (a tube that forms the bypass path 50, including a tube on an external space side (external tube) and a tube on an internal space side (internal tube)) through which the heating medium for cooling the internal space 21 flows between the external space side and the internal space side is provided.

In this example, the external tube includes a high-pressure side external tube 501 connected to the refrigerant path between the second on-off valve 59 and the liquid tank 54 through the first on-off valve 58 at one end thereof, and a low-pressure side external tube 502 connected to the refrigerant path between the air-conditioning evaporator 57 and the compressor 52 at one end thereof. Further, the internal tube includes a high-pressure side internal tube 503 connected to an inlet of the expansion device 39, and a low-pressure side internal tube 504 connected to an outlet of the evaporator. The high-pressure side external tube 501, the low-pressure side external tube 502, the sealing member 1, the high-pressure side internal tube 503 and the low-pressure side internal tube 504 form the bypass path 50.

Further, in this example, the sealing member 1 is disposed between the module case 22 and the housing 32 to perform sealing for simultaneously blocking the respective openings of the module case 22 and the housing 32 (the module opening 24 and the housing opening 34) and for securing sealability of the module case 22 and the housing 32.

The sealing member 1 is formed of a metal material such as aluminum, and as shown in Fig. 2, includes a member body 11 that is formed in a cross sectional shape having a size equivalent to or slightly smaller than that of the module opening 24 formed in the wall surface of the module case 22 or the housing opening 34 provided in the wall surface of the housing 32, and a flange part 12 that extends outward from a circumferential surface of the member body 11 and is formed in a shape having a size larger than that of the module opening 24 or the housing opening 34.

The flange part 12 of the sealing member 1 is provided with a module opening side locking surface 1a that is provided on a side thereof directed to the external space side (side directed to the module case 22) and is air-tightly locked to a peripheral edge portion of the module opening 24 from the inside through a seal member 4, and a housing opening side locking surface 1b that is provided on a side thereof directed to the internal space side (side directed to the housing 32) and is air-tightly locked to a peripheral edge portion of the housing opening 34 from the outside.

Further, the flange part 12 is fixed to the module case 22 and the housing 32 using fixing bolts 14 and 15. The fixing bolt 14 that fixes the flange part 12 to the module case 22 is screw-coupled with a screw hole 13a formed through a boss part 13 that is integrally formed with the module opening side locking surface 1a of the flange part 12 through a through-hole 22a formed in the module case 22, and the fixing bolt 15 that fixes the flange part 12 to the housing 32 is screw-coupled with a screw hole 12a formed in the housing opening side locking surface 1b of the flange part 12 through a through-hole 32a formed in the housing 32. These screw holes 12a and 13a are formed as bottomed holes that do not pass through the flange part 12, that is, blind holes.

The member body 11 of the sealing member 1 includes an external space side expansion part 111 that is inserted in the module opening 24 and to which the external tubes (the high-pressure side external tube 501 and the low-pressure side external tube 502) are attached from the external space side through an external mounting plate 61; and an internal space side expansion part 112 that is inserted in the housing opening 34 and to which the internal tubes (the high-pressure side internal tube 503 and the low-pressure side internal tube 504) are attached from the internal space side through an internal mounting plate 62.

The seal member 4 interposed between the module opening side locking surface 1a and the inner surface of the module case 22 is made of an elastic member such as a synthetic rubber and is formed in the same contour shape as that of the module opening side locking surface 1a, and thus, through-holes 4a and 4b are formed in locations that face the external space side expansion part 111 and the boss part 13 so that the seal members do not interfere with the external space side expansion part 111 and the boss part 13. Further, the seal member 4 is integrally formed with annular upright parts 41, 42, and 43 in which an outer peripheral edge portion, a peripheral edge portion of the through-hole 4a in which the external space side expansion part 111 is inserted, and a peripheral edge portion of the through-hole 4b in which the boss part 13 is inserted are vertically protruded in a plate-shaped elastic member, and is arranged between the module opening side locking surface 1a and an inner surface of the module case 22 in a state of being elastically deformed by the fixing bolt 14.

On the other hand, the housing opening side locking surface 1b is formed flat in the state of being formed with the screw hole 12a for fixing the sealing member 1 to the housing 32 and is in contact with the outer surface of the housing 32 without a particular seal member.

In the member body 11 of the sealing member 1, a high-pressure side path 11a in which the high-pressure side tubes (the high-pressure side external tube 501 and the high-pressure side internal tube 503) are inserted and a low-pressure side path 11b in which the low-pressure side tubes (the low-pressure side external tube 502 and the low-pressure side internal tube 504) are inserted are formed from an end surface of the external space side expansion part 111 to an end surface of the internal space side expansion part 112.

The external space side expansion part 111 may protrude from the module opening 24 to the external space side, or may not protrude from the module opening 24. The high-pressure side path 11a and the low-pressure side path 11b are opened in the end surface of the external space side expansion part 111. Further, an external mounting hole 111a for fixing the external mounting plate 61 to the sealing member 1 by a bolt 71 that is an external fixing member is formed in the end surface of the external space side expansion part 111.

In this example, the external mounting hole 111a formed in the external space side expansion part 111 is provided at one location of an approximately central portion of the end surface of the external space side expansion part 111, and is formed as a bottomed hole that does not pass through the sealing member 1, that is, a blind hole.

In the external tubes (the high-pressure side external tube 501 and the low-pressure side external tube 502) mounted to the external space side expansion part 111 of the sealing member 1, annular grooves 501b and 502b in which O rings 501a and 502a are respectively disposed on circumferential surfaces of end portions thereof are formed, and blade parts 501c and 502c are formed on front sides of the annular grooves (on sides opposite to the tip ends).

The external mounting plate 61 is formed in a plate shape made of a metal such as an aluminum alloy, and includes slits 61a and 61b corresponding to the tube diameters so that the external tubes (the high-pressure side external tube 501 and the low-pressure side external tube 502) can be inserted therein from one side of the plate. Further, the external mounting plate 61 is formed with a through-hole 61c in which the bolt 71 is inserted in an approximately central portion thereof.

The external tubes (the high-pressure side external tube 501 and the low-pressure side external tube 502) are inserted into the slits 61a and 61b of the external mounting plate 61 from one side thereof, and the blade parts 501c and 502c of the tubes are locked to the external mounting plate 61. Then, the tip end portions of the respective external tubes are inserted into the paths (the high-pressure side path 11a and the low-pressure side path 11b) of the external space side expansion part 111, so that the blade parts 501c and 502c are interposed between the external mounting plate 61 and the external space side expansion part 111. Further, the bolt 71 is inserted into the through-hole 61c provided in the external mounting plate 61 from the external space side to be screw-coupled with the external mounting hole 111a, and thus, the external tubes are fixed to the sealing member 1.

Further, the internal space side expansion part 112 protrudes from the housing opening 34 toward the internal space side, and may be formed so as not to protrude from the housing opening 34. In the end surface of the internal space side expansion part 112, the high-pressure side path 11a and the low-pressure side path 11b are opened. Further, in the end surface of the internal space side expansion part 112, an internal mounting hole 112a for fixing the internal mounting plate 62 to the sealing member 1 by a bolt 72 that is an internal fixing member is formed.

In this example, two internal mounting holes 112a are provided in the internal space side expansion part 112 with an interval in a direction perpendicular to a virtual line that connects an opening portion of the high-pressure side path 11a and an opening portion of the low-pressure side path 11b of the internal space side expansion part 112. Further, the respective internal mounting holes 112a are formed to shift with respect to the external mounting hole 111a around the axial center. The internal mounting hole 112a is also formed as a bottomed hole that does not pass through the sealing member 1, that is, a blind hole.

In the internal tubes (the high-pressure side internal tube 503 and the low-pressure side internal tube 504) provided in the internal space side expansion part 112 of the sealing member 1, annular grooves 503b and 504b in which O rings 503a and 504a are respectively disposed on circumferential surfaces of end portions thereof are formed, and blade parts 503c and 504c are formed on front sides of the annular grooves (on sides opposite to the tip ends).

The internal mounting plate 62 is formed in a plate shape made of a metal such as an aluminum alloy, and includes slits 62a and 62b corresponding to the tube diameters so that the internal tubes (the high-pressure side internal tube 503 and the low-pressure side internal tube 504) can be inserted therein from one side of the plate and two through-holes 62c and 62c in which the bolts 72 are inserted, formed in an approximately central portion thereof.

The internal tubes (the high-pressure side internal tube 503 and the low-pressure side internal tube 504) are inserted into the slits 62a and 62b of the internal mounting plate 62 from one side thereof, and the blade parts 503c and 504c of the tubes are locked to the internal mounting plate 62. Then, the tip end portions of the respective internal tubes are inserted into the paths (the high-pressure side path 11a and the low-pressure side path 11b) of the internal space side expansion part 112, so that the blade parts 503c and 504c are interposed between the internal mounting plate 62 and the internal space side expansion part 112. Further, the bolts 72 are inserted into the through-holes 62c provided in the internal mounting plate 62 from the internal space side to be screw-coupled with the internal mounting holes 112a, and thus, the internal tubes are fixed to the sealing member 1.

According to the above-described configuration, in the sealing member 1, since the module opening side locking surface 1a of the flange part 12 is in close contact with the inside of the peripheral edge portion of the module opening 24 of the module case 22 through the seal member 4, necessary water tightness and air tightness are secured between the module case 22 and the sealing member 1. Further, since the housing opening side locking surface 1b is in surface-contact with the peripheral edge portion of the housing opening 34 of the housing 32, necessary air tightness is secured between the housing 32 and the sealing member 1.

Further, since the external mounting hole 111a screw-coupled with the bolt 71 for fixing the external mounting plate 61 and the internal mounting holes 112a screw-coupled with the bolts 72 for fixing the internal mounting plate 62 are formed as the bottomed holes (holes that do not pass through the sealing member 1, that is, blind holes) in the member body 11, moisture or dust does not move between the external space 25 and the internal space 21 through gaps between the bolts 71 and 72 and the sealing member 1, and thus, it is possible to secure high sealability of the module case 22.

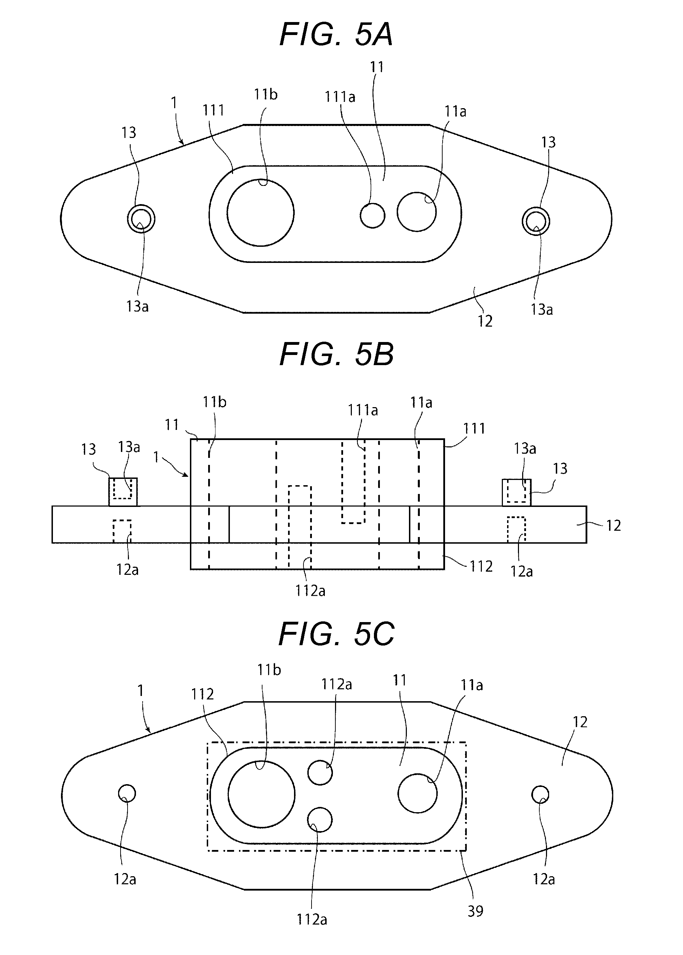

In the above-described configuration, an example in which the formation positions of the external mounting hole 111a and the internal mounting holes 112a shift from each other on the straight line approximately perpendicular to the virtual line that connects the opening portion of the high-pressure side path 11a and the opening portion of the low-pressure side path 11b is shown, but as shown in Figs. 5A to 5C, the external mounting hole 111a and the internal mounting holes 112a may be provided to shift from each other in the direction of the virtual line that connects the opening portion of the high-pressure side path 11a and the opening portion of the low-pressure side path 11b.

Even with this configuration, it is possible to separate the axial centers of the external mounting hole 111a and the internal mounting holes 112a. Thus, it is possible to decrease the thickness of the sealing member 1 along the mounting holes 111a and 112a, and thus, it is possible to achieve reduction in size and weight of the components. Alternatively, it is possible to form the mounting holes 111a and 112a to be deep, and thus, it is possible to firmly fix the mounting plates 61 and 62 to the sealing member 1, and to firmly fix the tubes to the sealing member 1.

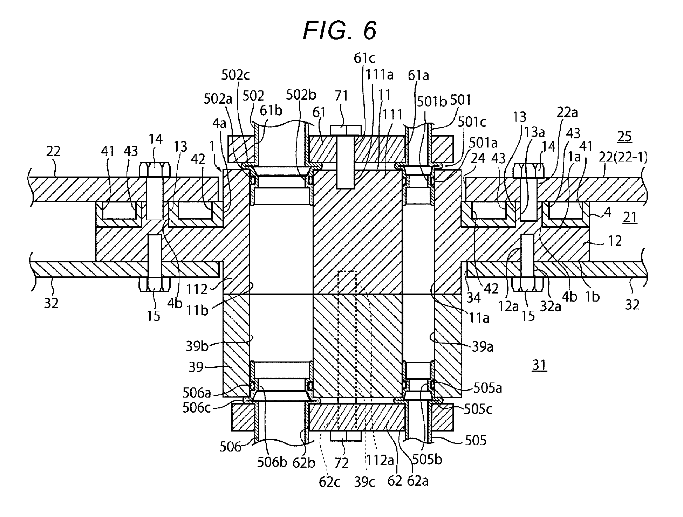

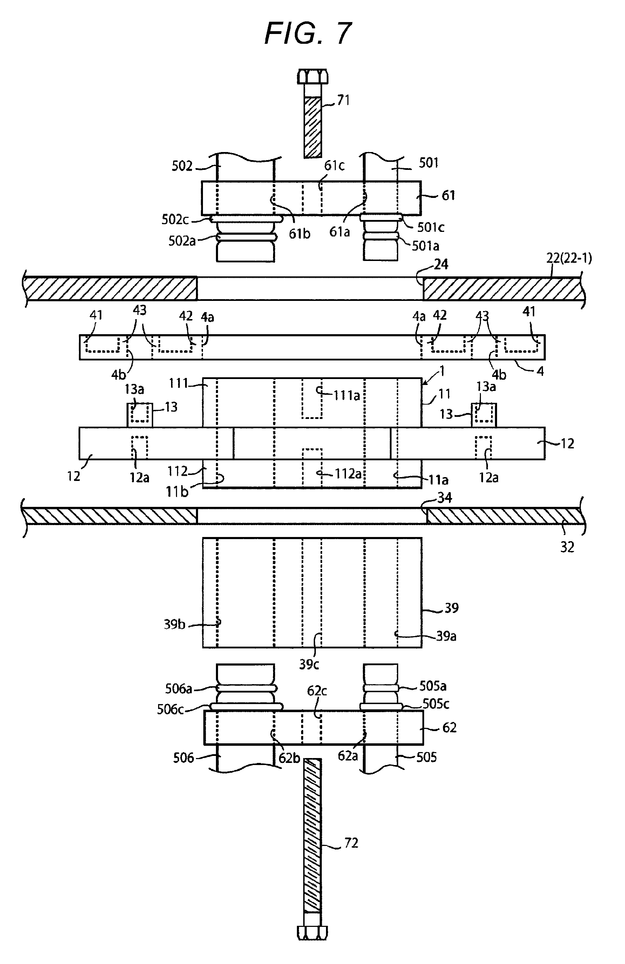

In Figs. 6 and 7, another configuration example indicating a mounting state of the sealing member according to the embodiment of the invention is shown.

In this example, a block-type expansion device 39 is attached to an end surface of the internal space side expansion part 112, and the internal tube is mounted to an end surface of the expansion device 39 opposite to the sealing member 1 (on a lower side of the expansion device 39 in Figs. 6 and 7) through the internal mounting plate 62. The internal tube includes a low-pressure side inflow tube 505 connected to an outlet of the expansion device 39 and a low-pressure side outflow tube 506 connected to an outlet of the evaporator.

The expansion device 39 is a known device, which is provided with a diaphragm or a valve mechanism (not shown) therein. Further, the expansion device 39 includes a high-pressure through-hole 39a connected to the high-pressure side path 11a of the sealing member 1 and a low-pressure through-hole 39b connected to the low-pressure side path 11b of the sealing member 1. The expansion device 39 decompresses and expands a refrigerant flowing through the high-pressure through-hole 39a to introduce the decompressed and expanded refrigerant to the evaporator 33 through the low-pressure side inflow tube 505, and introduces the refrigerant evaporated by the evaporator 33 from the low-pressure side outflow tube 506 to the low-pressure side path 11b through the low-pressure through-hole 39b. Further, through-holes 39c through which the bolts 72 that fix the internal mounting plate 62 are inserted are formed between the high-pressure through-hole 39a and the low-pressure through-hole 39b.

Accordingly, in this example, in the expansion device 39 disposed between the sealing member 1 and the tubes (the low-pressure side inflow tube 505 and the low-pressure side outflow tube 506), the inner refrigerant paths (the high-pressure through-hole 39a and the low-pressure through-hole 39b) serve as a part of the tubes, and thus, the bypass path 50 is configured by the high-pressure side external tube 501, the low-pressure side external tube 502, the sealing member 1, the expansion device 39, the low-pressure side inflow tube 505, and the low-pressure side outflow tube 506.

The respective tubes (the low-pressure side inflow tube 505 and the low-pressure side outflow tube 506) mounted to the expansion device 39 and the internal mounting plate 62 have the same configurations as the configurations shown in Fig. 2. That is, the low-pressure side inflow tube 505 and the low-pressure side outflow tube 506 are formed with annular grooves 505b and 506b in which O rings 505a and 506a are respectively disposed on circumferential surfaces of end portions thereof, and are formed with blade parts 505c and 506c on front sides of the annular grooves 505b and 506b (on sides opposite to the tip ends).

Further, the respective tubes (the low-pressure side inflow tube 505 and the low-pressure side outflow tube 506) are inserted into the slits 62a and 62b of the internal mounting plate 62 from one side thereof, and the blade parts 505c and 506c of the tubes are locked to the internal mounting plate 62. Then, the tip end portions of the respective tubes are inserted into the through-holes (the high-pressure through-hole 39a and the low-pressure through-hole 39b) of the expansion device 39, so that the blade parts 505c and 506c are interposed between the internal mounting plate 62 and the expansion device 39. Further, the bolts 72 are inserted into the through-holes 62c provided in the internal mounting plate 62 from the internal space side to be screw-coupled with the internal mounting holes 112a through the through-holes 39c, and thus, the internal tubes are fixed to the expansion device 39.

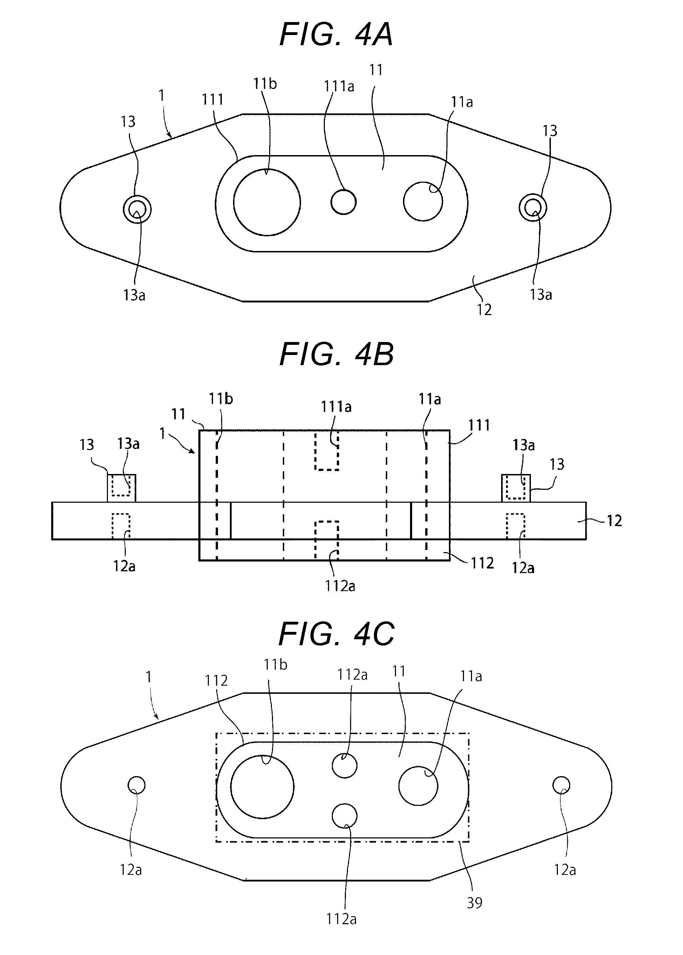

In this example, two internal mounting holes 112a are formed in the internal space side expansion part 112 of the sealing member 1 at the position of which the axial center shifts with respect to the external mounting hole 111a formed in the external space side expansion part 111, similar to the examples shown in Figs. 4A to 5C. In this respect, two through-holes 62c are formed in the internal mounting plate 62, and two through-holes 39c are formed in the expansion device 39. Further, the internal mounting holes 112a formed in the internal space side expansion part 112 are also formed as bottomed holes that do not pass through the sealing member 1, that is, blind holes, similar to the external mounting hole 111a formed in the external space side expansion part 111.

Since the other configurations are the same as the above-described configuration examples (Figs. 2 to 5), the same reference numerals are given to the same components, and the description will not be repeated.

Even in the above-described configuration, in the member body 11 of the sealing member 1, since the external mounting hole 111a screw-coupled with the bolt 71 for fixing the external mounting plate 61 and the internal mounting holes 112a screw-coupled with the bolts 72 for fixing the internal mounting plate 62 are formed as the bottomed holes (holes that do not pass through the sealing member 1, that is, blind holes), moisture or dust does not move between the external space 25 and the internal space 21 through the gaps between the bolts 71 and 72 and the sealing member 1, and thus, it is possible to secure high sealability of the module case 22.

In addition, design modification may be appropriately made in a range without departing from the spirit of the invention. For example, in Figs. 5A to 5C, the number of the internal mounting holes 112a formed in the internal space side expansion part 112 may be one. Further, the number of the tubes arranged in the internal space 21 may be reduced, or a processing time of the sealing member 1 may be reduced.

Further, in Fig. 1, in the configuration of the battery temperature adjusting unit 3, the inlet hole 37, the fan 35, the evaporator 33, the heater core 36, and the outlet hole 38 are sequentially arranged along the blowing path, but for example, the positions of the fan 35 and the evaporator 33 may be reversed so that an airflow path from the inlet hole 37 to the evaporator 33 and the fan 35 and an airflow path from the fan 35 to the heater core 36 and the outlet hole 38 are perpendicular to each other. In the fan 35 provided with the impeller 35a, since the air inflow direction and the air outflow direction are perpendicular to each other, it is possible to efficiently operate the temperature adjusting unit by arranging the components as described above.

Further, in the above-described embodiment, a configuration in which the respective tubes through which the refrigerant for cooling the internal space 21 is flowed are fixed to the external space side and the internal space side of the sealing member 1 provided in the module case 22 is described. In this regard, in a case where the heater core 36 is configured as the hot water type heater core, when the respective tubes that allow hot water to flow into the heater core 36 are fixed to the external space side and the internal space side of the sealing member 1 provided in the module case 22, the same configuration may be employed. Further, when the evaporator 33 is used as a radiator that radiates the heat of the refrigerant, the same configuration may be used.

## Claims

1. A sealing member (1) that is provided in a wall portion of a module case(22) that accommodates a storage battery(23) in an internal space (21) and blocks the internal space (21) of the module case(22) from an external space(25) with the wall portion, comprising:
a path(11a,11b) that connects the external space side and the internal space side and allows a heating medium for adjusting temperature of the internal space (21) to flow therein;
an external mounting hole(111a) that is connected to the external space side of the path(11a,11b) to fix an external tube (501, 502) through which the heating medium flows by an external fixing member(71); and
an internal mounting hole (112a) that is connected to the internal space side of the path(11a,11b) to fix an internal tube(503,504) through which the heating medium flows by an internal fixing member(72),
wherein the external mounting hole(111a) and the internal mounting hole(112a) are formed as bottomed holes.

2. A sealing member (1) that is provided in a wall portion of a module case(22) that accommodates a storage battery(23) in an internal space (21) and blocks the internal space (21) of the module case(22) from an external space(25) with the wall portion, comprising:
a path (11a,11b) that connects the external space side and the internal space side and allows a heating medium for adjusting temperature of the internal space(21) to flow therein;
an external mounting hole(111a) that is connected to the external space side of the path(11a,11b) to fix an external tube(501,502) through which the heating medium flows by an external fixing member(71); and
an internal mounting hole (112a) that is connected to the internal space side of the path(11a,11b) to fix an internal tube(503,504) through which the heating medium flows by an internal fixing member(72),
wherein the external mounting hole(111a) and the internal mounting hole (112a) are formed as holes that are not penetrated.

3. A sealing member (1) that is provided in a wall portion of a module case(22) that accommodates a storage battery(23) in an internal space (21) and blocks the internal space (21) of the module case (22) from an external space with the wall portion, comprising:
a path(11a,11b) that connects the external space side and the internal space side and allows a heating medium for adjusting temperature of the internal space (21) to flow therein;
an external mounting hole(111a) that is connected to the external space side of the path(11a, 11b) to fix an external tube (501, 502) through which the heating medium flows by an external fixing member(71); and
an internal mounting hole (112a) that is connected to the internal space side of the path(11a,11b) to fix an internal tube(503,504) through which the heating medium flows by an internal fixing member(72),
wherein the external mounting hole(111a) and the internal mounting hole(112a) are formed as blind holes.

4. The sealing member(1) according to any one of claims 1 to 3,
wherein the external mounting hole(111a) and the internal mounting hole(112a) are formed so that axial centers thereof shift from each other.

5. A storage battery temperature adjusting apparatus (3) comprising:
the sealing member(1) according to any one of claims 1 to 4;
a housing(32) that is disposed in the internal space of the module case(22) and is formed with an airflow path(31);
a cooler (33) that is accommodated in the airflow path (31) of the housing(33);
a fan (35) that is capable of sending air to the cooler (33) ; and
the internal tube(503,504),
wherein the internal tube (503, 504) connects the sealing member(1) to the cooler(33).

6. The storage battery temperature adjusting apparatus(3) according to claim 5, further comprising:
an expansion device(39),
wherein an inner cooling path (39a, 39b) of the expansion device forms a part of the internal tube(505,506),
wherein the expansion device (39) is disposed between the sealing member(1) and the internal tube(505,506), and
wherein the expansion device(39) and the internal tube(505,506) are fixed to the internal space side of the sealing member(1) by the internal fixing member(72).
